**Europäisches Patentamt**

(19) **European Patent Office**

**Office européen des brevets**

(11) Numéro de publication : **0 175 866**
**B1**

(12) **FASCICULE DE BREVET EUROPÉEN**

(45) Date de publication du fascicule du brevet :
**17.05.89**

(21) Numéro de dépôt : **85108903.7**

(22) Date de dépôt : **16.07.85**

(51) Int. Cl.⁴ : **G 01 D 11/02**

(54) **Palier autolubrifiant.**

(30) Priorité : **03.08.84 CH 3748/84**

(43) Date de publication de la demande :
**02.04.86 Bulletin 86/14**

(45) Mention de la délivrance du brevet :
**17.05.89 Bulletin 89/20**

(84) Etats contractants désignés :
**AT BE CH DE FR GB IT LI LU NL SE**

(56) Documents cités :
**CH—A—    7 627**
**CH—A—   128 272**
**CH—A—   329 810**
**CH—A—   332 553**
**FR—A— 1 113 014**

(73) Titulaire : **SARCEM SA**
**27 rue Cardinal-Journet Case Postale 371**
**CH-1217 Meyrin 1 (CH)**

(72) Inventeur : **Bonello, Philippe**
**26, Chemin des Pommiers**
**CH-1218 Grand-Saconnex (CH)**

(74) Mandataire : **Micheli, Michel-Pierre et al**
**MICHELI & CIE 118, Rue du Rhône Case Postale 47**
**CH-1211 Genève 6 (CH)**

## Description

La présente invention se rapporte à un palier autolubrifiant constituant simultanément une butée d'extrémité qui puisse être utilisée dans des applications très spéciales imposant des conditions de fonctionnement extrêmes, une absence totale de maintenance, une grande robustesse et une grande durabilité. Ces paliers sont particulièrement destinés à équiper des appareils de mesure incorporés aux tableaux de bord d'astronefs tels qu'horizons artificiels, compteurs altimétriques et barométriques, etc.

Pour ces applications très particulières, il est impératif de réduire le couple d'entraînement des parties mobiles le plus possible, de garantir un bon fonctionnement dans une gamme de température allant de — 60 °C à + 80 °C, que les caractéristiques de fonctionnement soient indépendantes du degré d'humidité relatives de l'ambiance dans laquelle le dispositif travaille.

Les paliers actuellement utilisés dans ce genre d'applications présentent généralement des surfaces de contact graphitées de sorte que pendant leur stockage avant montage dans les instruments et appareils en question et pendant ce montage des précautions particulières doivent être prises pour éviter que de la poussière ne vienne se coller sur les surfaces de glissement, ce qui altère les conditions de fonctionnement. En outre, le graphite est sensible au degré d'humidité de sorte que les caractéristiques, notamment le couple d'entraînement des appareils ainsi équipés varient en fonction de l'humidité ambiante.

On connaît également des documents CH 332 553 et CH 7627/74 des paliers pour mouvement d'horlogerie dont les conditions de fonctionnement n'ont strictement rien à voir avec celles pour lesquelles doivent être prévues les paliers pour instruments aéronautiques.

Dans le document CH 332 553 le contre-pivot est constitué par une pierre de·forme compliquée · le pivot présente un vide cylindrique et le pivot n'est pas en contact avec le contre-pivot.

Dans le document CH 7627/74 le contre-pivot est une plaque rectangulaire et le pivot, présentant la forme générale d'un disque, et monté à cran dans un corps.

De telles solutions ne permettent pas d'assurer un bon fonctionnement dans les conditions extrêmes précitées tant du fait du choix des matériaux utilisés que de la forme des différents éléments.

La présente invention a pour objet une réalisation très particulière résultant de la combinaison de multiples fonctions, pièces, formes et matériaux permettant de réaliser un palier autolubrifiant palliant aux inconvénients précités et permettant une réduction du couple d'entraînement, une plus grande durabilité, une absence totale de maintenance, un fonctionnement inalterné dans une plage de température allant de — 60 °C à + 80 °C et insensible au degré d'humidité.

Le palier autolubrifiant selon l'invention est caractérisé en ce qu'il comporte un corps en laiton muni d'un passage central traversant présentant une première surface cylindrique dans laquelle est chassé un disque en pierre dure naturelle ou synthétique, et une seconde surface cylindrique, de plus grand diamètre que la première, dans laquelle est chassée une bague en acier munie d'un perçage central d'un diamètre plus faible que celui de la première surface cylindrique et dont l'une des faces annulaires est en contact avec une des faces du disque en pierre dure ; par le fait qu'une pièce cylindrique en résine synthétique est fixée dans la bague d'acier, cette pièce présentant une surface cylindrique interne médiane destinée à recevoir un pivot et deux surfaces coniques allant en s'évasant depuis cette surface cylindrique médiane jusqu'aux surfaces frontales de cette pièce définissant ainsi un vide central présentant en coupe longitudinale la forme générale d'un diabolo, et par le fait que la face frontale interne de la pièce en résine synthétique est en contact avec la face du disque en pierre dure qui est en contact avec la bague d'acier.

Le dessin annexé illustre schématiquement et à titre d'exemple deux formes d'exécution du palier autolubrifiant selon l'invention.

La figure 1 est une coupe axiale d'une première forme d'exécution du palier.

La figure 2 est une coupe axiale d'une seconde forme d'exécution du palier.

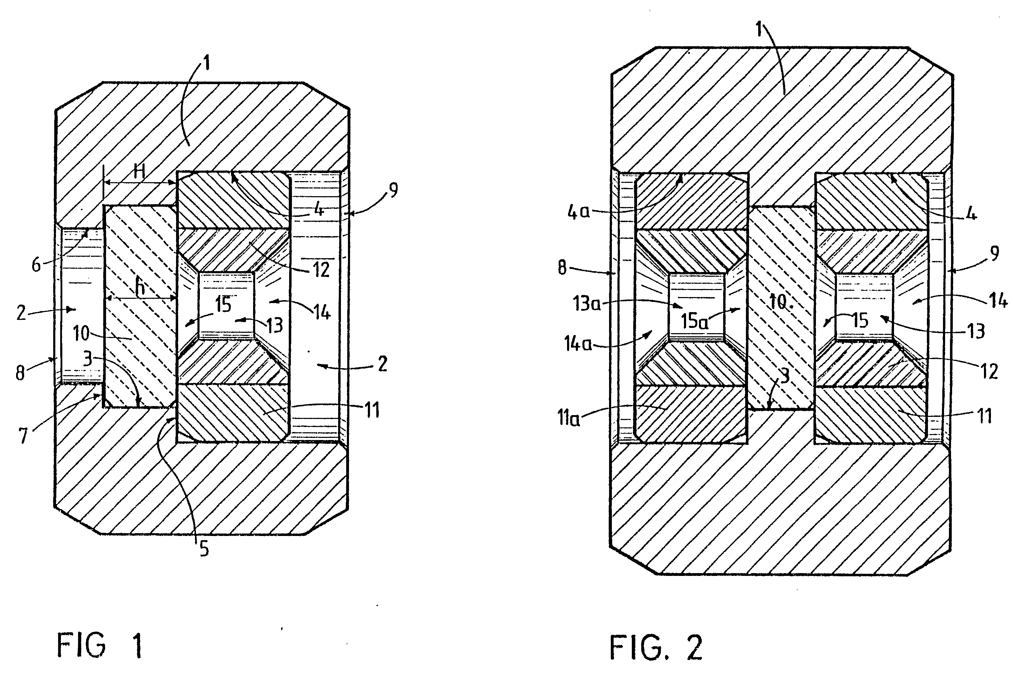

Le palier autolubrifiant illustré à très grande échelle à la figure 1 présente en grandeur nature un diamètre extérieur de l'ordre de 1 à 3 mm et une épaisseur de l'ordre de 0,6 à 1,8 mm, c'est-à-dire qu'il s'agit de paliers de très petites dimensions.

Ce palier destiné à équiper des instruments de mesure et appareils destinés à l'aéronautique tels que des compteurs altimétriques et barométriques par exemple doit être insensible au vieillissement, à l'humidité, aux variations de température dans une plage de — 60 °C à + 80 °C et ne nécessiter aucune maintenance, lubrification, nettoyage ou autre.

Pour obtenir un tel résultat la matière utilisée pour la réalisation des différentes pièces du palier est évidemment importante, mais il convient également de réaliser une combinaison de pièces et de déterminer la forme de chacune de celles-ci pour que les caractéristiques du palier réalisé soient optimales.

Le palier illustré à la figure 1 comporte un corps 1 de forme générale cylindrique, dont les arêtes ont été chanfreinées pour faciliter son montage dans un appareil ou instrument qui s'effectue généralement par chassage dans un perçage calibré.

Ce corps 1 présente un passage central traversant 2 présentant une première surface cylindrique 3 et une seconde surface cylindrique 4, de plus grand diamètre définissant ainsi un épaulement 5. Une troisième surface cylindrique 6, de plus faible diamètre que la première 3 définit un second épaulement 7. Les extrémités du passage central débouchant sur les faces frontales du corps 1 sont chanfreinées en 8 respectivement 9.

Un disque en rubis 10, synthétique ou naturel, présente un diamètre correspondant à celui de la première surface cylindrique. 3 afin d'être fixé dans le corps 1 par chassage ou à frottement gras dans cette surface cylindrique 3. L'épaisseur h de ce disque 10 est égale à la hauteur H de ladite surface cylindrique 3 de sorte que lorsque le disque en rubis 10 est en position de service, en appui contre l'épaulement 7, son autre face soit située dans le plan de l'épaulement 5. Les arêtes circulaires du disque 10 sont chanfreinées pour faciliter son introduction dans le corps 1.

Il est évident que ce disque en rubis 10 pourrait dans des variantes être réalisé dans une autre pierre synthétique ou naturelle généralement utilisée pour des paliers industriels.

Ce disque 10 en pierre dure est maintenu en position de service illustré par une bague en acier 11 sertie, frettée ou chassée à force dans la seconde surface cylindrique 4 du corps 1, qui vient en appui contre l'épaulement 5 et qui donc entre en contact avec la face frontale du disque 10. Les arêtes circulaires externes de cette bague 11 sont chanfreinées toujours pour faciliter son introduction dans le corps 1.

Cette bague en acier 11 renferme une pièce 12 en résine synthétique dénommé « Hostaforme® » fabriquée par la Maison HOEGST AKTIENGE-SELLSCHAFT, FRANKFURT A/MAINHÖGST, dont elle est rendue solidaire par tous moyens, chassage, frettage, collage, etc. L'épaisseur de cette pièce 12 est égale à celle de la bague, elle présente un alésage central 13 d'un diamètre correspondant à celui d'un pivot devant coopérer avec ce palier. Cet alésage 13 est prolongé de part et d'autre par des surfaces coniques 14, 15 allant en s'évasant en direction des faces frontales de la pièce 12. L'évidement de cette pièce 12 présente donc en coupe axiale la forme générale d'un diabolo.

Cette résine synthétique « Hostaforme® » est autolubrifiante et ne nécessite aucun graphitage ou autre lubrification externe.

Les essais avec ce type de paliers ont prouvés qu'ils étaient d'un montage très simple, ne nécessitant aucune opération de lubrification, qu'ils ne demandent aucune maintenance, qu'ils répondent aux conditions de fonctionnement exigées et énumérées plus haut et que le couple d'entraînement est diminué d'environ 50 % par rapport à un palier usuel et que de surcroît ce couple diminue après un certain temps d'utilisation sans introduire de jeu ou autre conséquence néfaste. Ce palier présente donc des caractéristiques mécaniques s'améliorant en fonction de sa durée d'utilisation.

La seconde forme d'exécution du palier illustrée à la figure 2 est un palier double dans lequel l'épaulement 7 contre lequel le disque 10 s'appuie, est remplacé par une seconde bague 11a chassée dans une surface cylindrique 4a que présente le corps 1a et renfermant une pièce 12a. Ainsi, le même disque en pierre dure 10 est utilisé comme butée pour des paliers en lignes coopérant avec deux pivots distincts coaxiaux. Les autres éléments de ce palier sont les mêmes que ceux décrits en référence à la figure 1.

## Revendications

1. Palier autolubrifiant, comprenant un corps (1) en laiton muni d'un passage central traversant, présentant une première surface cylindrique (3) dans laquelle est chassée un disque (10) en pierre dure naturelle ou synthétique et une seconde surface cylindrique (4), de plus grand diamètre que la première (3), dans laquelle est chassée une bague (11) en acier munie d'un perçage central d'un diamètre plus faible que celui de la première surface cylindrique (3) et dont l'une des faces annulaires est en contact avec une des faces du disque (10) en pierre dure ; ledit palier comportant de plus une pièce cylindrique (12) en résine synthétique fixée dans la bague d'acier (11), cette pièce (12) présentant une surface cylindrique interne (13) médiane destinée à recevoir un pivot et deux surfaces conique (14, 15) allant en s'évasant depuis cette surface cylindrique médiane (13) jusqu'aux surfaces frontales de cette pièce (12) définissant ainsi un vide central présentant en coupe longitudinale la forme générale d'un diabolo, la face frontale interne de la pièce en résine synthétique (12) étant en contact avec la face du disque (10) en pierre dure qui est en contact avec la bague d'acier (11).

2. Palier selon la revendication 1, dans lequel l'épaisseur (h) dudit disque (10) en pierre dure est égale à la hauteur (H) de la première surface cylindrique (3) et l'autre face frontale de ce disque (10) est en appui contre un épaulement (7) du corps (1).

3. Palier selon la revendication 1, dans lequel l'épaisseur (h) du disque (10) en pierre dure est égale à la hauteur (H) de la première surface cylindrique (3) et l'autre face frontale de ce disque (10) est en appui contre la face d'une seconde bague en acier (11a) chassée dans une autre surface cylindrique (4a) du corps (1) et renfermant une pièce identique à celle contenue dans la première bague en acier (11).

4. Palier selon l'une des revendications précédentes, dans lequel le disque (10) en pierre dure est en rubis naturel ou synthétique.

5. Palier selon l'une des revendications 1 à 3, dans lequel la pièce (12) contenue dans la bague (11) en acier est en « Hostaforme® ».

6. Palier selon la revendication 4, dans lequel les pièces (12) contenues dans les bagues (11, 11a) en acier sont en « Hostaforme® ».

## Claims

1. Autolubricating bearing, comprising a body (1) provided with a central through passage, presenting a first cylindrical surface (3) in which a disc (10) of natural or synthetic hard stone is driven and a second cylindrical surface (4), of greater diameter than the first one (3), in which a steel ring (11) is driven which is provided with a central hole having a diameter less than that of the first cylindrical surface (3) and one of the annular faces of which is in contact with one of the faces of the disc of hard stone ; the said bearing comprising further a cylindrical part (12) of synthetic resin fixed in the steel ring (11), this part (12) presenting an internal medial cylindrical surface (13) adapted to receive a pivot and two conical surfaces (14, 15) widening from said medial cylindrical surface (13) towards the frontal surfaces of this part (12) defining thus a central void presenting in longitudinal cross section the general shape of a diabolo, the frontal internal face of the part of synthetic resin (12) being in contact with the face of the hard stone disc (10) which is itself in contact with the steel ring (11).

2. Bearing according to claim 1, in which the thickness (h) of the hard stone disc (10) is equal to the height (H) of the first cylindrical surface (3) and the other frontal face of this disc (10) bears against a shoulder (7) of the body (1).

3. Bearing according to claim 1, in which the thickness (h) of the hard stone disc (10) is equal to the height (H) of the first cylindrical surface (3) and the other frontal face of this disc (10) bears against the face of a second steel ring (10a) driven into another cylindrical surface (4a) of the body (1) and housing a part identical to said part contained in the first steel ring (11).

4. Bearing according to one of the preceding claims, in which the hard stone disc (10) is of synthetic or natural ruby.

5. Bearing according to one of the claims 1 to 3, in which the part (12) contained in the steel ring (11) is made out of « Hostaforme® ».

6. Bearing according to claim 4, in which the parts (12) contained in the steel rings (11, 11a) are made out of « Hostaforme® ».

**Patentansprüche**

1. Selbstschmierendes Lager, mit einem Körper (1) aus Messing mit einem durchquerenden zentralen Kanal, der eine erste zylindrische Fläche (3) bildet, in die eine Scheibe (10) aus natürlichem oder künstlichem Hartstein eingetrieben ist, und der eine zweite zylindrische Fläche (4) mit grösserem Durchmesser als die erste Fläche (3) bildet, in die ein Ring (11) aus Stahl eingetrieben ist, der mit einer zentralen Bohrung von geringerem Durchmesser als die erste zylindrische Fläche (3) versehen ist und von dem eine der Ringflächen mit einer der Flächen der Scheibe (10) aus Hartstein in Berührung steht ; dieser Lager weisst ferner ein zylindrisches Teil (12) aus Kunstharz, die im Stahlring (11) befestigt ist, welches Teil (12) eine mittige innere zylindrische Fläche (13) aufweist, die zur Aufnahme eines Drehzapfens dient, wobei zwei konische Flächen (14, 15) sich von dieser mittigen zylindrischen Fläche (13) bis zu den frontalen Flächen dieses Teils (12) erweitern und somit einen zentralen Hohlraum bilden, der im Längsschnitt die allgemeine Form eines Diabolos hat, die innere frontale Fläche des Teils aus Kunstharz (42) ist mit einer Fläche der Scheibe (10) aus Hartstein in Berührung, die mit dem Stahlring (11) in Berührung steht.

2. Lager nach Anspruch 1, in welchem die Dicke (h) der Scheibe (10) aus Hartstein gleich der Höhe (H) der ersten zylindrischen Fläche (3) ist und die andere frontale Fläche dieser Scheibe (10) an einer Schulter (7) des Körpers (1) anliegt.

3. Lager nach Anspruch 1, in welchem die Dicke (h) der Scheibe (10) aus Hartstein gleich der Höhe (H) der ersten zylindrischen Fläche (3) ist und die andere frontale Fläche der Scheibe (10) an der Fläche eines zweiten Stahlrings (11a) anliegt, der in die andere zylindrische Fläche (4a) des Körpers (1) eingetrieben ist und ein Teil einschliesst, das mit dem im ersten Stahlring (11) enthaltenen Teil identisch ist.

4. Lager nach einem der vorhergehenden Ansprüche, in welchem die Scheibe (10) aus Hartstein natürlicher oder synthetischer Rubin ist.

5. Lager nach einem der Ansprüche 1 bis 3, in welchem das im Stahlring (11) enthaltene Teil (12) aus « Hostaforme® » besteht.

6. Lager nach Anspruch 4, in welchem die in den Stahlringen (11, 11a) enthaltenen Teile (12) aus « Hostaforme® » bestehen.

FIG. 2

FIG 1